# EUROPEAN PATENT SPECIFICATION

(11) **EP 3 597 977 B1**
(45) Date of publication and mention of the grant of the patent: **20.07.2022**
(21) Application number: 18768064.0
(22) Date of filing: 07.03.2018
(51) Int. Cl.: F16L 37/091, F16L 21/08

(54) **LOCKING RING AND PIPE JOINT**
SICHERUNGSRING UND ROHRVERBINDUNG
BAGUE DE RETENUE ET RACCORD DE TUYAU

(30) Priority: 14.03.2017 JP 2017048593
(43) Date of publication of application: 22.01.2020
(73) Proprietor: Bridgestone Corporation, Tokyo 104-8340 (JP)
(72) Inventor: MAEKAWA, Kento, Tokyo 104-8340 (JP)
(74) Representative: Oxley, Robin John George
(86) International application number: PCT/JP2018/008845
(87) International publication number: WO 2018/168614

(56) References cited:
- WO-A1-2017/029958
- WO-A1-2017/029958
- WO-A2-02/057673
- CH-A5- 541 763
- GB-A- 2 294 990
- GB-A- 2 294 990
- JP-A- H02 271 193
- JP-A- H02 271 193
- JP-A- 2001 124 264
- US-A1- 2006 125 236
- US-A1- 2009 194 990

## Description

### TECHNICAL FIELD

The present disclosure relates to a locking ring for preventing removal of a pipe inserted into a pipe joint from the pipe joint, and also to the pipe joint.

This application claims priority to and the benefit of Japanese Patent Application No. 2017-048593 filed on March 14, 2017.

### BACKGROUND

Conventionally, locking rings (engaging rings) for preventing removal of a pipe inserted into a pipe joint from the pipe joint in which each of a plurality of claws (teeth) have a flat-plate shape for biting the pipe inserted into the pipe joint from an outer circumferential side are known (e.g., see PTL 1). Attention is also drawn to the disclosures of GB2294990A, WO02/057673A2 and WO2017/029958A1.

### CITATION LIST

### Patent Literature

PTL 1: JP-A-2013-234760

### SUMMARY

### (Technical Problem)

However, there is a risk in the pipe joint provided with a locking ring as described above that claw portions of the locking ring excessively bite and penetrate the pipe when subjected to a force acting in a removal direction of the pipe from the pipe joint.

In order to solve the above problem, the present disclosure provides a locking ring that does not excessively bite a pipe inserted into a pipe joint, and a pipe joint that can prevent the locking ring from excessively biting the pipe inserted into the pipe joint.

### (Solution to Problem)

A locking ring according to a first aspect of the present invention is provided as claimed in claim 1.

A pipe joint according to a second aspect of the present invention is provided as claimed in claim 8.

### (Advantageous Effect)

The present disclosure can provide a locking ring that does not excessively bite a pipe inserted into a pipe joint, and a pipe joint that can prevent the locking ring from excessively biting the pipe inserted into the pipe joint.

### BRIEF DESCRIPTION OF THE DRAWINGS

FIG. 1 is a perspective view illustrating an embodiment of a pipe joint according to the present disclosure;
FIG. 2 is a cross-sectional side view illustrating a portion of the pipe joint of FIG. 1;
FIG. 3 is a plan view illustrating a locking ring according to an embodiment not covered by the claims, but which is useful for understanding the present invention;
FIG. 4 is a perspective view illustrating the locking ring of FIG. 3 having a cutaway portion;
FIG. 5 is a cross-sectional side view illustrating a portion of the locking ring of FIG. 3 taken from line A-A of FIG. 3;
FIG. 6 is a perspective view illustrating the portion of the locking ring of FIG. 3 viewed from the arrow B of FIG. 4;
FIG. 7A and FIG. 7B are diagrams illustrating results of an analysis performed on a locking ring;
FIG. 8 is a plan view illustrating a first example variation of the locking ring, which is according to the present invention;
FIG. 9 a perspective view illustrating the locking ring of FIG. 8 having a cutaway portion;
FIG. 10 is a cross-sectional side view illustrating a portion of the locking ring of FIG. 8 taken from line A'-A' of FIG. 8;
FIG. 11 is a perspective view illustrating a portion of the locking ring of FIG. 8 viewed from the arrow B' of FIG. 9;
FIG. 12A is a plan view illustrating a portion of a locking ring according to a second example variation, which is according to the present invention; and
FIG. 12B is a perspective view illustrating the portion of the locking ring illustrated in FIG. 12A.

### DETAILED DESCRIPTION

Hereinafter, embodiments of a locking ring and a pipe joint according to the present disclosure will be described with reference to the drawings.

### Pipe Joint

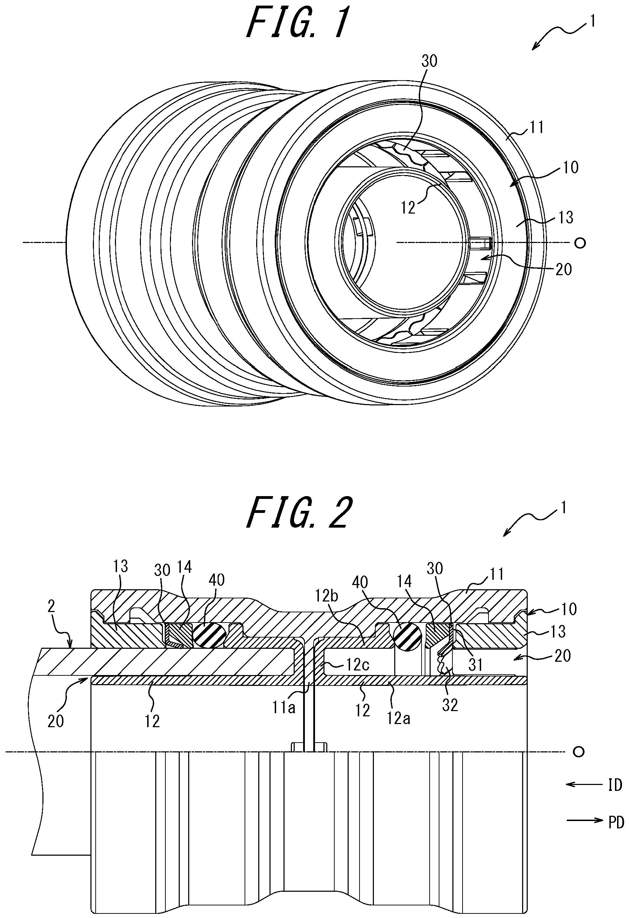

FIG. 1 and FIG. 2 illustrate a pipe joint 1 according to an embodiment of the present disclosure. The pipe joint 1 of the present embodiment can be favorably used for piping to supply cold water or hot water. However, the pipe joint 1 can be used for piping for any fluid including a liquid other than water or a gas.

FIG. 1 is a perspective view of the pipe joint 1 of the present embodiment, and FIG. 2 is a cross-sectional side view illustrating a portion the pipe joint of FIG. 1 along an axial direction of the pipe joint 1. Note that the axial direction of the pipe joint 1 (hereinafter, also simply referred to as "axial direction") refers to a direction extending along a central axis of the pipe joint 1. In the example illustrated in FIG. 1 and FIG. 2, the central axis of the pipe joint 1 coincides with a central axis O of a locking ring 30, which will be described later.

In the present embodiment, an insertion space 20 having an annular shape in the example of FIG. 2 for inserting the pipe 2 is formed on each of the left and right sides in the pipe joint 1 in the axial direction thereof, i.e., two insertion spaces 20 are formed. FIG. 2 illustrates a state in which the pipe 2 is inserted into the insertion space 20 on the left side alone, for convenience of explanation. The pipe 2 inserted into the pipe joint 1 is, for example, a cold/hot water supply pipe made of polybutene or cross-linked polyethylene.

However, the pipe joint 1 may have one or more than two insertion spaces 20.

The pipe joint 1 of the present embodiment includes a pipe joint body 10, a locking ring 30, and a sealing member 40.

The pipe joint body 10 defines the insertion space 20 on either side of the axial direction in the present embodiment. The pipe joint body 10 includes an outer cylindrical member 11, an inner cylindrical member 12, a fitted member 13, and an intermediate spacer member 14 in the present embodiment.

The outer cylindrical member 11 is made of, for example, a resin or a metal and has a substantially cylindrical shape that extends over the entire axial direction length of the pipe joint 1 in the embodiment illustrated in FIG. 1. As illustrated in FIG. 2, an inner circumferential surface of the outer cylindrical member 11 is provided with a step portion 11a that protrudes circumferentially inward in an approximately center of the axial direction of the pipe joint 1.

In the embodiment illustrated in the figures, each of the insertion spaces 20 includes the inner cylindrical member 12, the fitted member 13, the intermediate spacer member 14, the locking ring 30, and the sealing member 40.

In the following description, in directions extending along the axis direction, the leftward axial direction in FIG. 2 will be referred to as "first axial side", and the rightward axial direction in FIG. 2 will be referred to as "second axial side".

Hereinafter, the inner cylindrical member 12, the fitted member 13, the intermediate spacer member 14, the locking ring 30, and the sealing member 40 that are provided in association with the insertion space 20 on the second axial side (on the right side in FIG. 2) will be described. Note that the inner cylindrical member 12, the fitted member 13, the intermediate spacer member 14, the locking ring 30, and the sealing member 40 that are provided in association with the insertion space 20 on the first axial side (on the left side in FIG. 2) have similar configurations.

In the insertion space 20 on the second axial side (on the right side in FIG. 2), the direction directed to the first axial side corresponds to an inserting direction for inserting the pipe 2 into the insertion space 20 (hereinafter, referred to as "insertion direction ID"), and the direction directed to the second axial side corresponds to a direction for pulling out the pipe 2 from the insertion space 20 (hereinafter, referred to as "pulling direction PD").

The inner cylindrical member 12 is made of, for example, a resin or a metal and inserted into the inner periphery of the outer cylindrical member 11. The inner cylindrical member 12 includes a small-diameter cylindrical portion 12a spaced apart from the outer cylindrical member into the inner circumferential direction, a large-diameter cylindrical portion 12b that is positioned on an outer circumferential side of the small-diameter cylindrical portion 12a and abuts the inner circumferential surface of the outer cylindrical member 11, and a connecting portion 12c that joins the small-diameter cylindrical portion 12a and the large-diameter cylindrical portion 12b together and abuts the step portion 11a of the outer cylindrical member 11. The inner circumferential surface of the small-diameter cylindrical portion 12a defines a flow path of the pipe joint 1. On the other hand, the outer circumferential surface of the small-diameter cylindrical portion 12a, the inner circumferential surface of the large-diameter cylindrical portion 12b, and the surface of the connecting portion 12c facing the second axial side (on the inlet side of the insertion space 20) together define a portion of the insertion space 20.

The intermediate spacer member 14 is made of, for example, a resin and arranged on an inner circumferential side of the outer cylindrical member 11, on an outer circumferential side of the small-diameter cylindrical portion 12a of the inner cylindrical member 12, and on the second axial side (on the inlet side of the insertion space 20) with respect to the large-diameter cylindrical portion 12b of the inner cylindrical member 12.

The fitted member 13 is made of, for example, a resin and arranged on the outer circumferential side of the small-diameter cylindrical portion 12a of the inner cylindrical member 12 and, simultaneously, on the second axial side (on the inlet side of the insertion space 20) with respect to the intermediate spacer member 14 and fitted into the inner circumferential surface of the outer cylindrical member 11.

Each of the inner circumferential surface of the intermediate spacer member 14 and the inner circumferential surface of the fitted member 13 defines a portion of the insertion space 20.

The sealing member 40 is configured as, for example, an elastic O-ring and arranged over the entire circumference on the outer circumferential side of the insertion space 20 between the large-diameter cylindrical portion 12b of the inner cylindrical member 12 and the intermediate spacer member 14 in the axial direction. In a state in which the pipe 2 is not inserted into the insertion space 20, the inner diameter of the sealing member 40 is slightly smaller than the inner diameter of the large-diameter cylindrical portion 12b of the inner cylindrical member 12, the inner diameter of the intermediate spacer member 14, and the inner diameter of the fitted member 13. When the pipe 2 is inserted into the insertion space 20, the sealing member 40 is deformed so as to fit on the outer circumferential surface of the pipe 2 and thus seals between the pipe joint body 10 and the pipe 2 in a fluid-tight manner.

The locking ring 30 according to the present embodiment is made of, for example, a metal and arranged on the outer circumferential side of the insertion space 20 between the intermediate spacer member 14 and the fitted member 13 in the axial direction. In the embodiment illustrated in FIG. 2, the locking ring 30 includes a ring portion 31 that has an annular plate-like shape and is continuous over the entire circumference on the outer circumferential side of the insertion space 20, and a plurality of claw portions 32 having a plate-like shape that are arranged along the circumferential direction of the ring portion 31 and extend from the inner circumferential end portion of the ring portion 31 toward the inner circumferential side of the ring portion 31 deeper in the insertion direction of the insertion space 20 (i.e., an opposite side of the inlet of the insertion space 20 and one axial side of the ring portion 31). In a state in which the pipe 2 is not inserted into the insertion space 20, the inner diameter of the claw portions 32 of the locking ring 30 is slightly smaller than the inner diameter of the large-diameter cylindrical portion 12b of the inner cylindrical member 12, the inner diameter of the intermediate spacer member 14, and the inner diameter of the fitted member 13. When the pipe 2 is inserted into the insertion space 20, the tips (the inner circumferential end portions) of the claw portions 32 of the locking ring 30 bite and engage with the outer circumferential surface of the pipe 2. In this state, when a force acting in the pulling direction PD is applied to the pipe 2 inserted into the insertion space 20, the claw portions 32 of the locking ring 30 bend to the second axial side (the inlet side of the insertion space 20) and further bite the outer circumferential surface of the pipe 2, and thus function to prevent the removal of the pipe 2 from the insertion space 20.

Note that the pipe joint 1 of the present embodiment is not limited to the configuration described above and can be modified in a variety of manners.

For example, the sealing member 40 may be arranged on the second axial side (on the inlet side of the insertion space 20) from the locking ring 30. In this case, the sealing member 40 may be accommodated in, for example, an annular groove (not illustrated) extending in the circumferential direction on the inner circumferential surface of the fitted member 13.

Alternatively, the sealing member 40 may be arranged on, for example, the inner circumferential side of the insertion space 20 and fitted into an annular groove (not illustrated) extending in the circumferential direction on the outer circumferential surface of the small-diameter cylindrical portion 12a of the inner cylindrical member 12. In this case, when the pipe 2 is inserted into the insertion space 20, the sealing member 40 is deformed to tightly contact the inner circumferential surface of the pipe 2, and thus seals between the pipe joint body 10 and the pipe 2 in a fluid-tight manner.

Further, although the ring portion 31 of the locking ring 30 extends annularly along a virtual plane perpendicular to the axial direction of the pipe joint 1 in the embodiment illustrated in FIG. 2, the ring portion 31 may extend annularly along a virtual plane that non-vertically intersects the axial direction of the pipe joint 1.

### Locking Ring

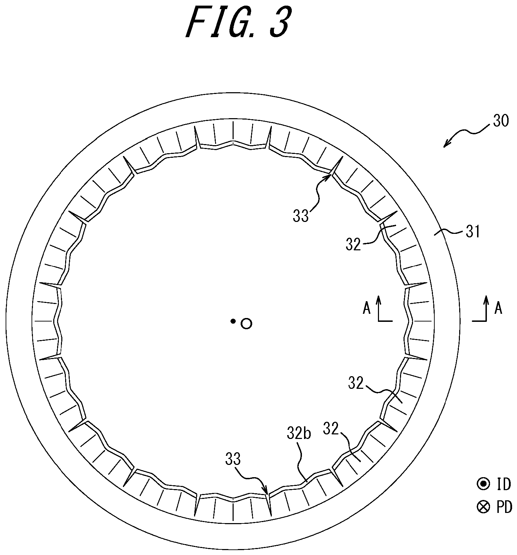

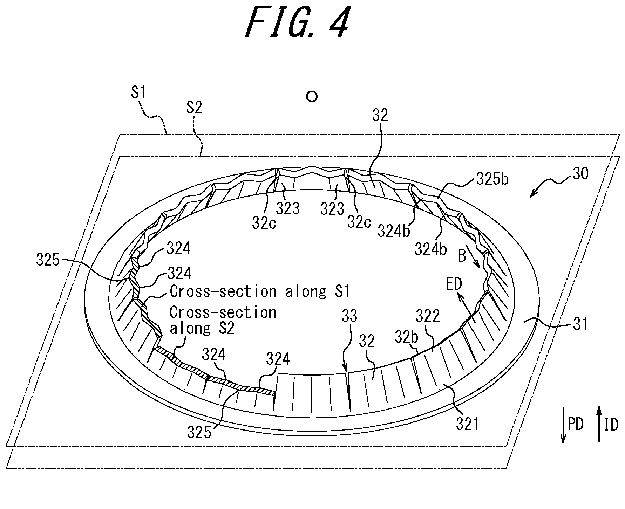

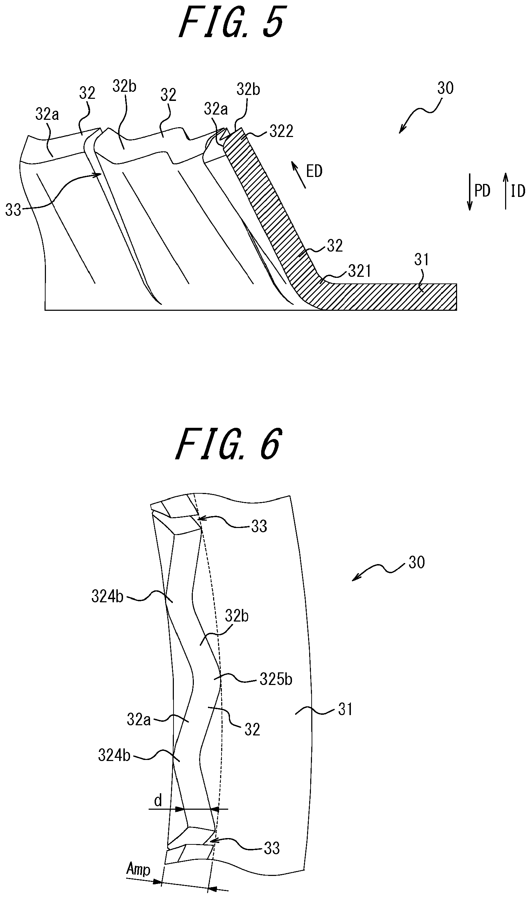

Next, the locking ring 30 of the present embodiment will be described in further detail with reference to FIG. 3 to FIG. 7. The locking ring 30 illustrated in FIG. 3 to FIG. 6 is the same as the locking ring 30 provided to the pipe joint 1 illustrated in FIG. 1 and FIG. 2. FIG. 3 is a plan view illustrating the locking ring 30. FIG. 4 is a perspective view of the locking ring 30 having a cut-away portion. FIG. 5 is a cross-sectional view of a portion of the locking ring 30 taken from line A-A of FIG. 3. The line A-A of FIG. 3 extends along the radial direction of the ring portion 31 of the locking ring 30. FIG. 6 is a perspective view of a portion of the locking ring 30 viewed from the arrow B of FIG. 4. In particular, FIG. 6 illustrates the portion of the locking ring 30 viewed from a tip side of the claw portions 32 of the locking ring 30.

As described above, the locking ring 30 of the present embodiment includes the ring portion 31 having the annular shape (the plate-like shape in the present embodiment) and a plurality of (sixteen in the illustrated example) claw portions 32 having a plate-like shape that are arranged along the circumferential direction of the ring portion 31 and extend from the inner circumferential end (i.e., the radially inner end portion) of the ring portion 31 toward the inner circumferential side of the ring portion 31 on one axial side. A slit 33 is formed between adjacent claw portions 32.

Note that the axial direction of the ring portion 31 (hereinafter, also simply referred to as "axial direction") refers to a direction along the central axis O of the locking ring 30 (i.e., the same as the central axis of the ring portion 31).

As described above with reference to FIG. 2, the locking ring 30 is attached to the pipe joint 1 in such a manner that the claw portions 32 extend from the ring portion 31 to the inner circumferential side of the ring portion 31 in the insertion direction of the insertion space 20.

In the present embodiment, the locking ring 30 is obtained by pressing, slit-forming, and bending a metal sheet. That is, the ring portion 31 and the claw portions 32 are integrally formed. However, the ring portion 31 and the claw portions 32 may be separately formed and attached together. In this case, the ring portion 31 and the claw portions 32 may be made of different materials, such as a resin and a metal, respectively.

The claw portions 32 may extend from the radially central portion of the ring portion 31.

FIG. 4 illustrates a cross-section of the claw portions 32 along virtual planes S1 and S2 that are located at two different axial direction positions and perpendicular to the axial direction. As illustrated in FIG. 4, the plurality of claw portions 32 have at least a portion that has a wave shape in a cross-section perpendicular to the axial direction. In particular, the plurality of claw portions 32 have a wave shape at least in a portion of an extending direction to the inner circumferential side on one axial side (hereinafter, also simply referred to as "extending direction ED of the claw portions 32") and/or at least in a portion of the circumferential direction. More specifically, in the illustrated example, the plurality of claw portions 32 have a wave shape approximately over the entire circumferential direction from root portions 321 (i.e., the ends of the claw portions 32 close to the ring portion 31) in the extending direction ED of the claw portions 32 to the tips 32b (the end faces of the claw portions 32 on the opposite side of the ring portion 31) in the extending direction ED in the cross-section perpendicular to the axial direction.

Here, "have a wave shape in the cross-section perpendicular to the axial direction" means that, when the cross-section of the plurality of claw portions 32 perpendicular to the axial direction is viewed as a whole along the circumferential direction of the ring portion 31, the plurality of claw portions 32 have amplitude in the radial direction of the ring portion 31 (i.e., repeat extending to the outer circumferential side and inner circumferential side alternately). At this time, it is assumed that the gap between claw portions 32 adjacent to each other is assumed to smoothly connect the claw portion 32.

In the example illustrated in FIG. 4 and FIG. 6, the plurality of claw portions 32, when viewed along the circumferential direction of the ring portion 31, have a wave shape that have amplitude in the thickness direction over the entire circumference. Further, it can be said that, in the illustrated embodiment, the plurality of claw portions 32 have a wave shape over the entire circumference in the cross section perpendicular to the extending direction ED. In the illustrated embodiment, the amplitude of the claw portions 32 in the thickness direction gradually increases toward a tip end of the claw portion 32 in the extending direction ED.

The term "wave shape" used herein refers to any wave shape such as an R-wave shape (i.e., a non-angular smooth wave shape) or a jagged wave shape (i.e., an angular wave shape), unless otherwise specified. In the embodiment illustrated in FIG. 3 to FIG. 6, the wave shape of the plurality of claw portions 32 is the R-wave shape.

Here, the tips 32b of the claw portions 32 in the extending direction ED refer to ends (end faces) of the claw portions 32 located on the opposite side of the ring portion 31. On the other hand, the root portions 321 of the claw portions 32 in the extending direction ED refer to the root sides of the claw portions 32 in the extending direction ED (close to the ring portion 31) that have approximately 30% of the entire length of the claw portions 32 in the extending direction ED. Tip portions 322 of the claw portions 32 in the extending direction ED refer to distal end portions of the claw portions 32 in the extending direction ED close to the tip 32b and have approximately 30% of the entire length of the claw portions 32 in the extending direction ED.

As illustrated in FIG. 4, at least some of the plurality of claw portions 32 (preferably all of the claw portions 32), when viewed as individual, does not have a flat shape and have a recessed portion 324 having a U-shape or a V-shape recessed to the inner circumferential side or a protruding portion 325 having a U-shape or a V-shape protruding to the outer circumferential side at least in a portion of the extending direction ED in the cross-section perpendicular to the axial direction.

In the present specification, the claw portion 32 is "flat" in the cross-section perpendicular to the axial direction means that each of the claw portions 32 extends linearly in the cross-section perpendicular to the axial direction or extends in an arc shape along a circle common over the claw portions 32, whereby each of the plurality of claw portions 32 does not have amplitude in the radial direction of the ring portion 31 when viewed as a whole.

At least some of the plurality of the claw portions 32 (preferably all of the claw portions 32), when viewed as individual, have a wave shape formed by one recessed portion 324, a wave shape formed by one protruding portion 325, or a wave shape formed by one or more protruding portions 325 and one or more recessed portions 324 alternately arranged, at least in a portion of the extending direction ED in the cross-section perpendicular to the axial direction.

In FIG. 4, each of the claw portions 32 have a W-shape as a whole in which, in the approximately entire length of the extending direction ED, one protruding portion 325 is formed between recessed portions 324 adjacent to each other in the cross-section perpendicular to the axial direction.

Similarly, as illustrated in FIG. 4 and FIG. 6, at least some of the plurality of the claw portions 32 (preferably all of the claw portions 32), when viewed individually, preferably have the respective tips 32b that are located in the extending direction ED, each ofwhich includes at least one recessed portion 324 having a U-shape or a V-shape recessed portioned in the inner circumferential direction or at least one protruding portion 325 having a U-shape or a V-shape protruding in the outer circumferential direction, rather than the tip 32b formed as a flat portion.

At least some of the plurality of the claw portions 32 (preferably all of the claw portions 32), when viewed individually, have the tips 32b that are located in the extending direction ED and have a wave shape formed by one recessed portion 324b, one protruding portion 325b, or one or more protruding portions 325b and one or more recessed portions 324b alternately arranged.

In the example illustrated in FIG. 4 and FIG. 6, each of the tips 32b of the claw portions 32 has a W-shape as a whole formed by a pair of recessed portions 324b and one protruding portion 325b arranged therebetween.

The plurality of claw portions 32, when viewed as a whole, may have a wave shape in the cross-section perpendicular to the axial direction in a portion of the extending direction ED. For example, the plurality of claw portions 32 may have a wave shape in the root portion 321 or tip portion 322 alone located in the extending direction ED. In this case, a plurality of claw portions 32 have a flat shape in another potion in the extending direction ED.

When a plurality of claw portions 32, when viewed as a whole, have the tip portion 322 located in the extending direction have a wave shape in the cross-section perpendicular to the axial direction as described in the present embodiment, the bending formation in forming the wave shape is facilitated during the production of the locking ring 30, as compared to a case in which the plurality of claw portions 32 have the root portion 321 located in the extending direction ED that has a wave shape in the cross-section perpendicular to the axial direction.

Note that some of the plurality of the claw portions 32 alone may have a flat shape in the cross-section perpendicular to the axial direction over the entire length in the extending direction ED.

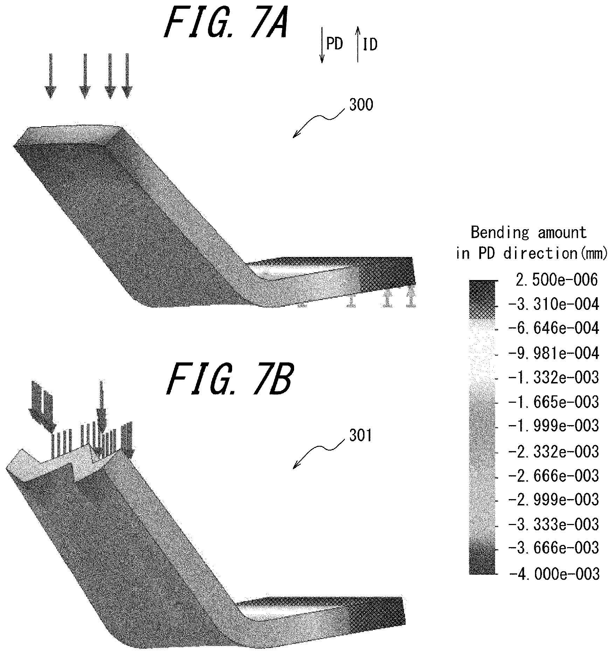

FIG.7A and 7B are diagrams illustrating results of an analysis performed on the locking ring. FIG. 7A illustrates the result of the analysis of a bending amount of an analysis model 300 that corresponds to a portion of a locking ring having the claw portions 32 in a flat shape over the entire length thereof in the extending direction ED, in an assumed case in which, in a state where the locking ring is mounted in a pipe joint, the locking ring is subjected to a force acting in the pulling direction PD. FIG. 7B illustrates the result of the analysis of a bending amount of an analysis model 301 that corresponds to a portion of a locking ring having the claw portions 32 in a wave shape over the entire length thereof in the extending direction ED in the cross-section perpendicular to the axial direction, in an assumed case in which, in a state in which the locking ring is mounted in a pipe joint, the locking ring is subjected to a force acting in the pulling direction PD. As can be seen from FIG. 7A and FIG. 7B, when the claw portions 43 have a wave shape as illustrated in FIG. 7B, the rigidity of the locking ring resistant to the force acting in the pulling direction PD is more increased than that of the claw portions 32 having a flat shape as illustrated in FIG. 7A, whereby the locking ring (especially the claw portions 32) is unlikely to bend when subjected to a force acting in the pulling direction PD.

According to the locking ring 30 of the present embodiment, a plurality of claw portions 32 have a wave shape in the cross-section perpendicular to the axial direction at least in a portion in the extending direction ED. Thus, in a state in which the locking ring 30 is mounted in the pipe joint 1, when the locking ring 30 is subjected to a force acting in the pulling direction PD of the pipe 2 inserted into the pipe joint 1, the rigidity of the locking ring 30 resistant to the force acting in the pulling direction PD on the locking ring 30 from the pipe 2 increases. Thus, the locking ring 30 (especially the claw portions 32) becomes unlikely to bend when is subjected to a force acting in the pulling direction PD. Accordingly, when the pipe 2 inserted into the pipe joint 1 is pulled out of the pipe joint 1, the claw portions 32 of the locking ring 30 are prevented from excessively biting the pipe 2 and thus can be prevented from penetrating and tearing the pipe 2.

The claw portions 32 preferably extend straight in any circumferential position thereof in the cross-section along the radial direction of the ring portion 31, as illustrated in FIG. 5. This configuration can increase the rigidity of the claw portions 32 resistant to a force acting in the pulling direction PD more than that of a case in which, for example, the claw portions 32 have a wave shape that has amplitude in a thickness direction in the cross-section along the radial direction of the ring portion 31. Thus, the claw portions 32 can be prevented from excessively biting the pipe 2 when the pipe 2 is pulled out of the pipe joint 1.

Preferably, the plurality of claw portions 32 have a wave shape at least in the tip portions 322 in the extending direction ED in the cross-section perpendicular to the axial direction.

This configuration can increase the rigidity of the claw portions 32 resistant to a force acting in the pulling direction PD more than that of a case in which, for example, the tip portions 322 located in the extending direction ED of the claw portions 32 have a flat shape in the cross-section perpendicular to the axial direction. Thus, the claw portions 32 can be prevented from excessively biting the pipe 2 when the pipe 2 is pulled out of the pipe joint 1.

In this case, also, in a state in which the locking ring 30 is mounted in the pipe joint 1, when the pipe 2 is inserted into the pipe joint 1, a depth and a width of a scratch that may be formed on the outer circumferential surface of the pipe 2 by the claw portions 32 can be reduced, as compared to a case in which the tip portions 322 in the extending direction ED of a plurality of claw portions 32 have a flat shape in the cross-section perpendicular to the axial direction. Thus, in the pipe joint 1 that includes the sealing member 40 arranged deeper in the insertion direction in the insertion space 20 from the locking ring 30 and on the outer circumferential side of the insertion space 20 as illustrated in the example in FIG. 2, a space is suppressed from forming between the outer circumferential surface of the pipe 2 inserted into the pipe joint 1 and the sealing member 40. Accordingly, fluid leakage (water leakage in the present embodiment) can be suppressed.

Preferably, at least the tip portions 322 in the extending direction ED of a plurality of claw portions 32, when viewed as a whole, have a non-angular smooth wave (i.e., R-wave) shape in the cross section perpendicular to the axial direction, as illustrated in the embodiment in FIG. 3 to FIG. 6. This configuration increases areas of the claw portions 32 to come into contact with (i.e., enables surface contact with) the pipe 2 when the pipe 2 is inserted into pipe joint 1, unlike a case in which the tip portions 322 located in the extending direction ED of the claw portions 32 have an angular wave shape in the cross-section perpendicular to the axial direction. Thus, the depth of the scratch formed on the pipe 2 can be reduced. Accordingly, in the pipe joint 1 that includes the sealing member 40 that is arranged deeper in the insertion direction in the insertion space 20 from the locking ring 30 and on the outer circumferential side of the insertion space 20 as illustrated in the embodiment in FIG. 2, waver leakage from between the sealing member 40 and the pipe 2 can be suppressed.

As illustrated in the embodiment in FIG. 4, preferably, a plurality of claw portions 32, when viewed as a whole, have the wave shape at least in the tip portions 322 in the extending direction ED in the cross-section perpendicular to the axial direction and, simultaneously, at least in the tip portions 322 in the extending direction ED, each of the circumferential end portions 323 are gradually inclined toward the outer circumferential side as they are located closer to the respective circumferential ends 32c.

Here, the term "inclined" as used herein is not limited to a linearly extending manner and also includes a curved extending manner.

In particular, the shape of the claw portions 32 having such a configuration in the cross-section perpendicular to the axial direction may have, for example, a W-shape as a whole in which a pair of recessed portions 324 is formed on the respective circumferential ends of the claw portion 32 and connected to each other via one protruding portion 325 as illustrated in the embodiment of FIG. 4, a wave shape in which one or more protruding portions 325 and one or more recessed portions 324 are alternately arranged between a pair of recessed portions 324, or a shape formed by one recessed portion 324.

In other words, the shape of the claw portions 32 in the cross-section perpendicular to the axial direction is preferably not a shape in which the protruding portion 325 is formed at least one circumferential side of the claw portion 32.

In this way, when the pipe 2 is inserted into the pipe joint 1 having the locking ring 30 mounted therein, the inner circumferential edge of the circumferential end portions 323 of the claw portions 32 can be suppressed from scratching the outer periphery of the pipe 2.

In this specification, the circumferential end 32c of the claw portion 32 refers to the circumferential end portion (end surface) of the claw portion 32.

Similarly, it is preferable that the tips 32b of the claw portions 32 have a W-shape as a whole in which a pair of recessed portions 324 is formed on the respective circumferential ends of the claw portion 32 and connected to each other via one protruding portion 325 as illustrated in FIG. 4 and FIG. 6, a wave shape in which one or more protruding portions 325 and one or more recessed portions 324 are alternately arranged between a pair of recessed portions 324, or a shape formed by one recessed portion 324b.

In the present embodiment as illustrated in FIG. 5, it is preferable that an inner circumferential edges 32a in the tips 32b located in the extending direction ED of the claw portions 32 have an R-shape (i.e., non-angular) in the cross-section along the radial direction of the ring portion 31. This configuration can suppress the inner circumferential edges 32a of the claw portions 32 from scratching the outer circumferential surface of the pipe 2 when the pipe 2 is inserted into the pipe joint 1 having the locking ring 30 mounted therein. Thus, the pipe joint 1 in which the sealing member 40 is arranged deeper in the insertion direction in the insertion space 20 from the locking ring 30 and on the outer circumferential side of the insertion space 20 as illustrated in the embodiment in FIG. 2 can suppress waver leakage from between the sealing member 40 and the pipe 2.

The number of the claw portions 32 of the locking ring 30 is not limited to 16 sheets as in the present embodiment and may be less than or more than 16 sheets.

Further, although a total number of the protruding portions 325 and the recessed portions 324 in one claw portion 32 in the cross-section perpendicular to the axial direction is three in the present example, the total number may be one, two, or more than three.

As the amplitude of the wave shape of the tips 32b of the claw portions 32 in the thickness direction increases more, the rigidity of the claw portion 32 resistant to a force acting in the pulling direction PD can be increased, whereas there is more risk of scratching the pipe 2 when the pipe 2 is inserted into the pipe joint 1 and increasing a force necessary to insert the pipe 2 into the pipe joint 1. From this point of view, the amplitude Amp in the thickness direction of the wave shape formed by each of the tips 32b of the claw portions 32 (i.e., a distance between the maximum outer diameter position and the minimum inner diameter position of the tip 32b of the claw portion 32 in the thickness direction thereof) is preferably 1.6 to 4.2 times of the thickness d of the claw portions 32 (i.e., 1.6d ≤ Amp ≤ 4.2d) (see FIG. 6). Especially in the embodiment of FIG. 6, the amplitude Amp of the thickness direction of the wave shape formed by each of the tips 32b of the claw portions 32 is more preferably 1.8 to 3.1 times of the thickness d of the claw portions 32 (i.e., 1.8 d ≤ Amp ≤ 3.1d).

In the present embodiment, the slit 33 formed between the claw portions 32 adjacent to each other has a V-shape in which a slit width gradually decreases toward the root side from the tip side in the extending direction ED of the claw portion 32, as illustrated in FIG. 4 and FIG. 6. The slit width of the slit 33 in a position corresponding to the tips 32b located in the extending direction of the claw portions 32 is equal to or smaller than a thickness d of the claw portions 32.

The locking ring according to the present embodiment is not limited to the configuration illustrated in FIG. 3 to FIG. 6 and may be modified in a variety of manners. Hereinafter, example variations of the locking ring according to the present disclosure will be described.

### Locking Ring of First Example Variation

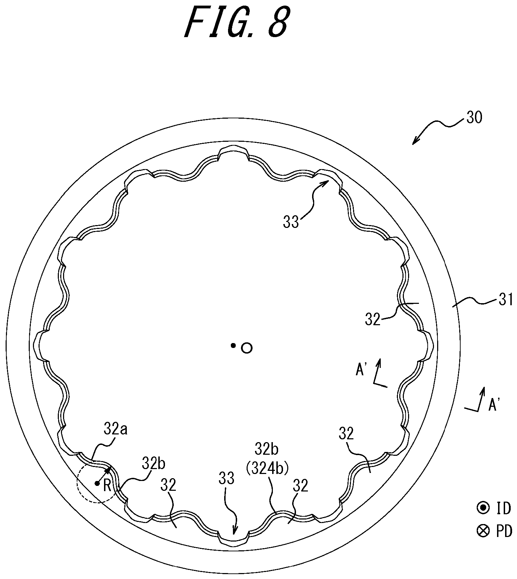

FIG. 8 to FIG. 11 illustrate a first example variation of the locking ring of the present disclosure and correspond to FIG. 3 to FIG. 6, respectively. In the locking ring 30 of the present example, the claw portions 32 have a different shape as that of the locking ring 30 of the above embodiment illustrated in FIG. 3 to FIG. 6.

In a manner similar to the above embodiment illustrated in FIG. 3 to FIG. 6, the locking ring 30 of the present example includes a ring portion 31 having an annular shape (a plate-like shape in this example), and a plurality of (twelve in this example) claw portions 32 having a plate-like shape that are arranged along the circumferential direction of the ring portion 31 and extend from the inner circumferential end portion (i.e., radially inner end portion) of the ring portion 31 toward the inner circumferential side of the ring portion 31 on one axial side of the ring portion 31. The locking ring 30 is obtained by pressing, slit-forming, and bending a metal sheet. That is, the ring portion 31 and the claw portions 32 are integrally formed. A plurality of claw portions 32 have a wave shape approximately entirely in the cross-section perpendicular to the axial direction. More specifically, a plurality of claw portions 32, when viewed as a whole, have a non-angular smooth wave shape (i.e., an R-wave shape) in the entire extending direction ED of the claw portions 32 over the entire circumference in the cross-section perpendicular to the axial direction. Further, a plurality of claw portions 32, when viewed as a whole, include the respective circumferential end portions 323 that are inclined gradually approximately entirely in the extending direction ED toward the outer circumferential side as they are located closer to the circumferential ends 32c.

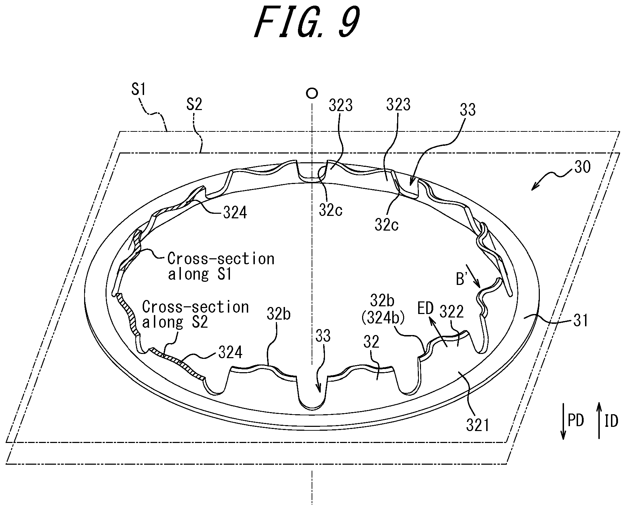

As illustrated in FIG. 9, each of the claw portions 32, when viewed individually, has a rounded wave shape formed by one recessed portion 324 that extends toward the inner circumferential side in a manner recessed in a U-shape in the cross-section perpendicular to the axial direction approximately over the entire extending direction ED. In particular, the claw portions 32 extend along an arc having a center of curvature on the outer circumferential side of the claw portions 32 in a circumferential central portion of the claw portions 32 in the cross-section perpendicular to the axial direction. In this configuration, by virtue of the rounded shape of the claw portions 32, the tips of the claw portions 32 can be suppressed from leaving sharp scratches on the outer circumferential surface of the pipe 2 when the pipe 2 is inserted into the pipe joint 1 in the insertion direction ID.

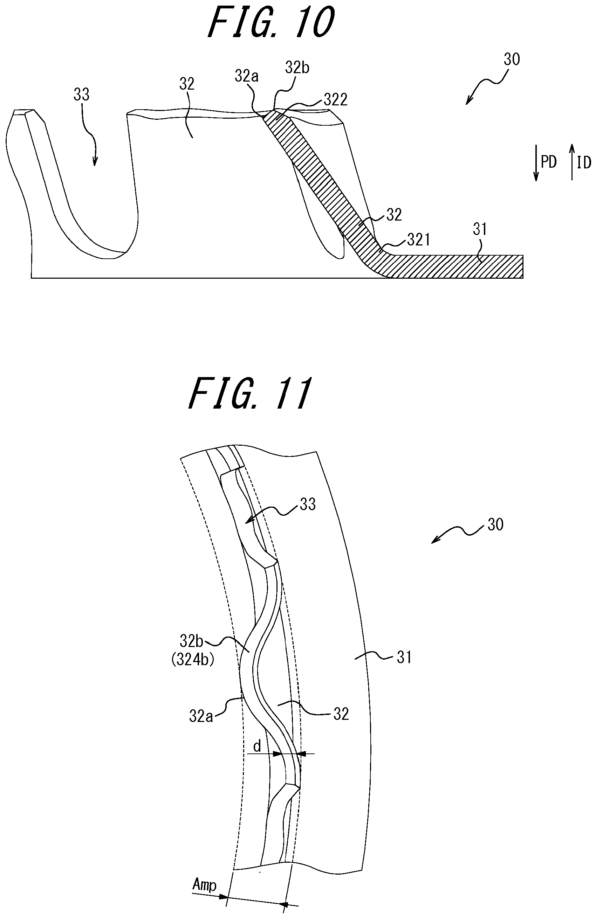

Similarly, each of the claw portions 32, when viewed individually, has the tip 32b in the extending direction ED (the end surface of the claw portion 32 on the opposite side of the ring portion 31) that has a curved wave shape formed by one recessed portion 324b extending toward the inner circumferential side in a manner recessed in a U-shape, as illustrated in FIG. 9 and FIG. 11. The claw portions 32 include the tips 32b that are located in the extending direction ED and extend along an arc having a center of curvature on the outer circumferential side of the claw portions 32 in a central circumferential portion of the tip 32b. Thus, when the pipe 2 is inserted into the pipe joint 1 in the insertion direction ID, the tips of the claw portions 32 are prevented from leaving sharp scratches on the outer circumferential surface of the pipe 2.

From the viewpoint of suppressing scratches during insertion of the pipe 2 as described above and the viewpoint of manufacturability, it is preferable to set a large value to the radius of curvature R of the arc having the center of curvature on the outer circumferential side of the tips 32b of the claw portions 32 formed in a circumferential central portion of the inner circumferential edges 32a of the tips 32b of the claw portions 32 in a plan view along the axial direction of the locking ring 30 of the present example as illustrated in FIG. 8. In particular, the radius of curvature R is 1.2 to 1.4 mm.

In the present example, further, in the cross-section perpendicular to the axial direction, the claw portions 32 include both the circumferential end portions 323 that extend being gradually inclined toward the outer circumferential side as they are located closer to both of the circumferential ends 32c of the claw portions 32 and extend along the arc having a center of curvature on the inner circumferential side of the claw portions 32, as illustrated in FIG. 9. Because both of the circumferential end portions 323 of the claw portions 32 extend along the arc having a center of curvature on the inner circumferential side of the claw portions 32, when the pipe 2 inserted into the pipe joint 1 is pulled out of the pipe joint 1, the claw portions 32 of the locking ring 30 are prevented from excessively biting the pipe 2, and can be effectively prevented from penetrating and tearing the pipe 2.

In the present example, similarly, each of the claw portions 32, when viewed individually from the tip 32b, includes the tip 32b that extends gradually inclining toward the outer circumferential side as it is positioned closer to both of the circumferential ends of the tip 32b in both of the circumferential end portions of the tip 32b and extends along the arc that has a center of curvature on the inner circumferential side of the claw portions 32, as illustrated in FIG. 9 and FIG. 11.

In the present example, the slit 33 formed between the claw portions 32 adjacent to each other has a U-shape in which the slit width gradually decreases from the tip side of the claw portion 32 in the extending direction ED toward the root side, as illustrated in FIG. 9 and FIG. 11. In a position corresponding to the tip 32b located in the extending direction ED of the claw portion 32, the slit width (the length measured along the circumferential direction) of the slit 33 is larger than the thickness d of the claw portions 32. A preferred value of the slit width of the slit 33 is determined according to the thickness d of the claw portions 32 and the length of the extending direction ED.

When the slit 33 is increased in size as described above, the claw portions 32 are easily fallen down by a force applied from the pipe 2 during insertion of the pipe 2 into the pipe joint 1 in the insertion direction ID, and thus the tips of the claw portions 32 can be effectively prevented from excessively biting the outer circumferential surface of the pipe 2. Accordingly, the claw portions 32 can be prevented from leaving a deep scratch on the outer circumferential surface of the pipe 2.

From a similar viewpoint, the slit 33 preferably extends to a position as close to the root portion of the claw portion 32 (preferably to the root portion) as possible in the extending direction ED of the claw portions 32, as illustrated in the example in FIG. 9. However, the slits 33 may be terminated at a position before reaching the root portion of the claw portion 32 in the extending direction ED of the claw portion 32.

In the present example, the inner circumferential edge 32a of the tip portion 32b of the claw portion 32 does not have an R-shape and has an angular shape in the cross-section along the radial direction of the ring portion 31, as illustrated in FIG. 10.

In the present example, the amplitude Amp of the thickness direction of the wave shape formed by the tips 32b of the claw portions 32 is preferably 1.6 to 4.2 times (1.6d ≤ Amp ≤ 4.2d) of the thickness d of the claw portion 32, and more preferably 1.8 to 3.1 times (1.8d ≤ Amp ≤ 3.1d), as illustrated in FIG. 11.

### Locking Ring of Second Example Variation

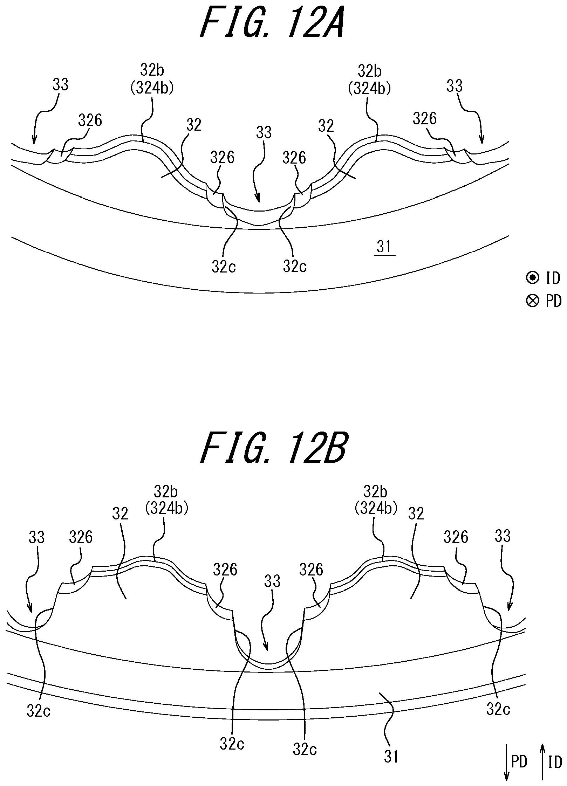

FIG 12 illustrates a second example variation of the locking ring of the present disclosure. FIG. 12A illustrates a portion of the locking ring 30 in a plan view along the axial direction in a manner similar to FIG. 8. FIG. 12B illustrates the portion of the locking ring 30 illustrated in FIG. 12A viewed from an oblique direction in a manner similar to FIG. 9. The locking ring 30 of the present example is different from the locking ring 30 of the first example variation described above illustrated in FIG. 7 to FIG. 11, in terms of that the claw portions 32 include the respective cutouts 326.

In the example illustrated in FIG. 12, each of the claw portions 32 includes the cutout 326 in at least one circumferential side (on both circumferential sides in this example) of the tip end 32b. The cutout 326 has a convexly curved shape toward the root side of the claw portion 32.

The claw portions 32 according to the first example variation illustrated in FIG. 7 to FIG. 11 do not include the cutout 326 and have an approximately uniform length of the extending direction ED of the claw portions 32 along the circumferential direction. On the other hand, the claw portions 32 according to the second example variation have the length of the extending direction ED that gradually decreases toward a circumferential end 32c of the claw portion 32 in a circumferential portion that includes the cutout 326.

Thus, by virtue of the cutouts 326 formed at the tips 32b of the claw portions 32, the claw portions 32 of the locking ring 30 are suppressed from excessively biting the pipe 2 when the pipe 2 inserted into the pipe joint 1 is pulled out of the pipe joint 1. Accordingly, the claw portions 32 of the locking ring 30 are effectively prevented from penetrating and tearing the pipe 2.

Note that the claw portions 32 may have the respective cutout 326 at only one of the circumferential end portions of the tip end 32b.

Further, only some of a plurality of claw portions 32 may have the respective cutouts 326.

In the example illustrated in FIG. 12, the depth of the cutout 236 in the extending direction ED of the claw portion 32 is smaller than the depth of the slit 33 in the extending direction ED of the claw portion 32.

Note that the cutouts 326 of the claw portions 32 of the second example variation may be provided at least one of the circumferential ends of the tips 32b of the claw portions 32 of the embodiment illustrated in FIG. 3 to FIG. 6.

### INDUSTRIAL APPLICABILITY

The locking ring according to the present disclosure can be used for a pipe joint. The pipe joint according to the present disclosure can be used for a pipe for any fluid such as cold water, hot water, oil, a gas, or the like.

### REFERENCE SIGNS LIST

1: pipe joint, 2: pipe, 10: pipe joint body, 11: outer cylindrical member, 11a: step portion, 12: inner cylindrical member, 12a: small-diameter cylindrical portion, 12b: large-diameter cylindrical portion, 12c: connecting portion, 13: fitted member, 14: intermediate spacer member, 20: insertion space, 30: locking ring, 31: ring portion, 32: claw portion, 32a: inner circumferential end edge of tip of claw portion, 32b: tip of claw portion, 32c: circumferential end of claw portion, 33: slit, 40: sealing member, 300 and 301: analysis model, 321: root portion of claw portion, 322: tip portion of claw portion, 323 : circumferential end portion of claw portion, ED: extending direction of claw portion, 324 and 324b: recessed portion, 325 and 325b: protruding portion, 326: cutout, ID: insertion direction, O: central axis of locking ring, PD: puling direction, S1 and S2: virtual plane perpendicular to axial direction of ring portion

## Claims

1. A locking ring (30) for preventing a pipe (2) inserted into a pipe joint (1) from being pulled out, the locking ring (30) comprising:
a ring portion (31) having an annular shape; and
a plurality of claw portions (32) having a plate-like shape that are arranged along a circumferential direction of the ring portion (31) and each extend from the ring portion (31) in an extending direction that is directed toward an inner circumferential side and toward one side of an axial direction of the ring portion (31),
wherein the plurality of claw portions (32) at least partially have a wave shape in a cross-section perpendicular to the axial direction, and
**characterised in that**,
in the cross-section perpendicular to the axial direction, each claw portion (32) extends along an arc having a center of curvature on an outer circumferential side of the claw portion (32), in a central circumferential portion of the claw portion (32).

2. The locking ring (30) according to claim 1,
wherein the plurality of claw portions (32) have a wave shape in the cross-section perpendicular to the axial direction at least in respective tip portions (322) in the extending direction.

3. The locking ring (30) according to claim 2,
wherein the plurality of claw portions (32) have a non-angular smooth wave shape in the cross-section perpendicular to the axial direction at least in respective tip portions (322) in the extending direction.

4. The locking ring (30) according to claim 2 or 3,
wherein the plurality of claw portions (32) have a wave shape in the cross-section perpendicular to the axial direction at least in respective tip portions (322) in the extending direction, and both circumferential end portions (323) of the claw portions (32) are gradually inclined toward an outer circumferential side as they are located closer to respective circumferential ends (32c).

5. The locking ring (30) according to any one of claims 1 to 4,
wherein the inner circumferential end edge (32a) of the claw portion (32) is rounded in a cross-section along a radial direction of the ring portion (31).

6. The locking ring (30) according to any one of claims 1 to 5,
wherein a slit (33) formed between the claw portions (32) adjacent to each other has a U-shape having a slit (33) width that gradually decreases from a tip side toward a root side of the extending direction (ED) of the claw portions (32).

7. The locking ring (30) according to any one of claims 1 to 6,
wherein each of the claw portions (32) has a cutout (326) formed in at least one circumferential end portion of respective insertion space (20).

8. A pipe joint (1) comprising:
a pipe joint body (10) that defines an insertion space (20) into which a pipe (2) is to be inserted;
the locking ring (30) according to any one of claims 1 to 7 arranged on an outer circumferential side of the insertion space (20); and
a sealing member (40) that is arranged on an outer circumferential side or an inner circumferential side of the insertion space (20) and seals between the pipe joint body (10) and the pipe (2) in a fluid-tight manner in a state in which the pipe (2) is inserted into the insertion space (20).

## Patentansprüche

1. Sicherungsring (30) zum Verhindern, dass ein Rohr (2), das in eine Rohrverbindung (1) eingesetzt ist, herausgezogen wird, wobei der Sicherungsring (30) Folgendes umfasst:
einen Ringabschnitt (31), der eine ringförmige Gestalt aufweist, und
eine Vielzahl von Klauenabschnitten (32) mit einer plattenartigen Form, die entlang einer Umfangsrichtung des Ringabschnitts (31) angeordnet sind und sich jeweils von dem Ringabschnitt (31) aus in einer Ausdehnungsrichtung erstrecken, die hin zu einer inneren Umfangsseite und hin zu einer Seite einer axialen Richtung des Ringabschnitts (31) gerichtet ist,
wobei die Vielzahl von Klauenabschnitten (32) zumindest teilweise eine Wellenform in einem Querschnitt, senkrecht zu der axialen Richtung, aufweist und
**dadurch gekennzeichnet, dass**,
in dem Querschnitt, senkrecht zu der axialen Richtung, sich jeder Klauenabschnitt (32) entlang eines Bogens erstreckt, der einen Krümmungsmittelpunkt auf einer äußeren Umfangsseite des Klauenabschnitts (32), in einem mittigen Umfangsabschnitt des Klauenabschnitts (32), aufweist.

2. Sicherungsring (30) nach Anspruch 1,
wobei die Vielzahl von Klauenabschnitten (32) zumindest in jeweiligen Spitzenabschnitten (322) in der Ausdehnungsrichtung eine Wellenform in dem Querschnitt, senkrecht zu der axialen Richtung, aufweist.

3. Sicherungsring (30) nach Anspruch 2,
wobei die Vielzahl von Klauenabschnitten (32) zumindest in jeweiligen Spitzenabschnitten (322) in der Ausdehnungsrichtung eine nicht-winklige sanfte Wellenform in dem Querschnitt, senkrecht zu der axialen Richtung, aufweist.

4. Sicherungsring (30) nach Anspruch 2 oder 3,
wobei die Vielzahl von Klauenabschnitten (32) zumindest in jeweiligen Spitzenabschnitten (322) in der Ausdehnungsrichtung eine Wellenform in dem Querschnitt, senkrecht zu der axialen Richtung, aufweist und die beiden Umfangsendabschnitte (323) der Klauenabschnitte (32) allmählich hin zu einer äußeren Umfangsseite geneigt sind, wenn sie näher zu jeweiligen Umfangsenden (32c) angeordnet sind.

5. Sicherungsring (30) nach einem der Ansprüche 1 bis 4,
wobei die innere Umfangsendkante (32a) des Klauenabschnitts (32) in einem Querschnitt entlang einer radialen Richtung des Ringabschnitts (31) abgerundet ist.

6. Sicherungsring (30) nach einem der Ansprüche 1 bis 5,
wobei ein Schlitz (33), der zwischen den zueinander benachbarten Klauenabschnitten (32) geformt ist, eine U-Form aufweist, die eine Breite des Schlitzes (33) aufweist, die von einer Spitzenseite hin zu einer Fußseite der Ausdehnungsrichtung (ED) der Klauenabschnitte (32) allmählich abnimmt.

7. Sicherungsring (30) nach einem der Ansprüche 1 bis 6,
wobei jeder der Klauenabschnitte (32) einen Ausschnitt (326) aufweist, der in mindestens einem Umfangsendabschnitt eines jeweiligen Einsetzraums (20) geformt ist.

8. Rohrverbindung (1), die Folgendes umfasst:
einen Rohrverbindungskörper (10), der einen Einsetzraum (20) definiert, in den ein Rohr (2) einzusetzen ist;
den Sicherungsring (30) nach einem der Ansprüche 1 bis 7, der auf einer äußeren Umfangsseite des Einsetzraums (20) angeordnet ist; und
ein Abdichtungselement (40), das auf einer äußeren Umfangsseite oder einer inneren Umfangsseite des Einsetzraums (20) angeordnet ist und in einem Zustand, in dem das Rohr (2) in den Einsetzraum (20) eingesetzt ist, auf eine fluiddichte Weise zwischen dem Rohrverbindungskörper (10) und dem Rohr (2) abdichtet.

## Revendications

1. Bague de verrouillage (30) pour empêcher un tuyau (2) inséré dans un raccord de tuyau (1) d'être retiré, la bague de verrouillage (30) comprenant :
une partie de bague (31) ayant une forme annulaire ; et
une pluralité de parties de griffe (32) ayant une forme de plaque qui sont agencées le long d'un sens circonférentiel de la partie de bague (31) et chacune s'étendant de la partie de bague (31) dans un sens d'extension qui est dirigé vers un côté circonférentiel intérieur et vers un côté d'un sens axial de la partie de bague (31),
dans laquelle la pluralité de parties de griffe (32) au moins partiellement ont une forme de vague dans une section transversale perpendiculaire au sens axial, et
**caractérisée en ce que**,
dans la section transversale perpendiculaire au sens axial, chaque partie de griffe (32) s'étende le long d'un arc ayant un centre de courbure sur un côté circonférentiel extérieur de la partie de griffe (32), dans une partie circonférentielle centrale de la partie de griffe (32).

2. Bague de verrouillage (30) selon la revendication 1,
dans laquelle la pluralité de parties de griffe (32) ont une forme de vague dans la section transversale perpendiculaire au sens axial au moins dans des parties de pointe respectives (322) dans le sens d'extension.

3. Bague de verrouillage (30) selon la revendication 2,
dans laquelle la pluralité de parties de griffe (32) ont une forme de vague lisse non angulaire dans la section transversale perpendiculaire au sens axial au moins dans des parties de pointe respectives (322) dans le sens d'extension.

4. Bague de verrouillage (30) selon la revendication 2 ou 3,
dans laquelle la pluralité de parties de griffe (32) ont une forme de vague dans la section transversale perpendiculaire au sens axial au moins dans des parties de pointe respectives (322) dans le sens d'extension, et les deux parties d'extrémité circonférentielle (323) des parties de griffe (32) sont progressivement inclinées vers un côté circonférentiel extérieur lorsqu'elles sont situées plus près d'extrémités circonférentielles respectives (32c).

5. Bague de verrouillage (30) selon l'une quelconque des revendications 1 à 4,
dans laquelle le bord d'extrémité circonférentielle intérieur (32a) de la partie de griffe (32) est arrondi dans une section transversale le long d'un sens radial de la partie de bague (31).

6. Bague de verrouillage (30) selon l'une quelconque des revendications 1 à 5,
dans laquelle une fente (33) formée entre les parties de griffe (32) adjacentes l'une à l'autre a une forme de U ayant une largeur de fente (33) qui diminue progressivement d'un côté de la pointe à un côté de la racine du sens d'extension (ED) des parties de griffe (32).

7. Bague de verrouillage (30) selon l'une quelconque des revendications 1 à 6,
dans laquelle chacune des parties de griffe (32) possède une découpe (326) formée dans au moins une partie d'extrémité circonférentielle d'un espace d'insertion (20) respectif.

8. Raccord de tuyau (1) comprenant :
un corps de raccord de tuyau (10) qui définit un espace d'insertion (20) dans lequel un tuyau (2) est à insérer ;
la bague de verrouillage (30) selon l'une quelconque des revendications 1 à 7 agencée sur un côté circonférentiel extérieur de l'espace d'insertion (20) ; et
un élément d'étanchéité (40) qui est agencé sur un côté circonférentiel extérieur ou un côté circonférentiel intérieur de l'espace d'insertion (20) et fait joint entre le corps de raccord de tuyau (10) et le tuyau (2) de manière étanche dans un état dans lequel le tuyau (2) est inséré dans l'espace d'insertion (20).
